# EUROPEAN PATENT APPLICATION

(11) **EP 3 945 385 A1**
(43) Date of publication of application: **02.02.2022**
(21) Application number: 20188578.7
(22) Date of filing: 30.07.2020
(51) Int. Cl.: G05B 23/02, F02M 21/00

(54) **CONTINUOUS FLOW ENGINE MONITORING METHOD AND SYSTEM**

(71) Applicant: Siemens Energy Global GmbH & Co. KG, 81739 München (DE)
(72) Inventor: Wiesner, Thomas, 96126 Ermershausen (DE)

(57) **Abstract**

The present invention refers to a continuous flow engine monitoring method providing an improved evaluation with regard to required maintenance actions and reviewing possibilities based on a simplified and broadened insight in a plurality of components and related characteristics. Furthermore, the present invention refers to a system being adapted to perform such method. Additionally, the present invention refers to an industrial plant containing such system. Furthermore, the present invention refers to a computer program product being utilized to realize such method. Additionally, the present invention refers to a use of such means to improve the utilization of such continuous flow engine.

## Description

The present invention refers to a method of monitoring an industrial plant containing a continuous flow engine, wherein a detailed assessment of a significant part of the components is provided. Furthermore, the present invention refers to a system to enable such method. Additionally, the present invention refers to an upgrade kit containing such system. Furthermore, the present invention refers to a computer program product adapted to perform such method. Additionally, the present invention refers to a use of the inventive method, system or computer program product.

Continuous flow engines are well established devices utilized in the industry. Examples are compressors as utilized, for example, in large-scale industrial production processes like refineries or turbines like gas turbines or steam turbines utilized in the energy production. Corresponding devices in provided the significant increase in utilization the past. Being some experimental possibility many decades ago to the highly reliable and long-lasting device quite difficult to impossible to replace now. While the generic type of engine is available since long time these units are still subject to further developments. Especially, the change from past utilization and monitoring as well as maintenance concepts to modern highly advanced and sophisticated concepts requires a significant change in acquiring and utilizing data in this context. Especially, it was noted that the significantly higher amount of data available is accompanied by further additional work for operators and the like. Simultaneously, the amount of people monitoring the available continuous flow engines continuously decreases based on new means to monitor such engines allowing their time to be spent more effectively making such reduction possible. However, corresponding observations and calculations indicate that soon a break-even point will be reached, wherein the available time of corresponding experts tasked with monitoring such devices and industrial plants containing such engines will fall under a level ensuring that problems and damages will be dealt with in a reasonable way. Besides the need to constantly increase the benefits and options provided for such continuous flow engines and corresponding industrial plants the aforementioned development further provides challenges to be tackled. For example, there is a need to provide a supporting system to reduce the workload on people monitoring and controlling such continuous flow engines. Herein, a system has to be provided taking into account that the corresponding staff is challenged with changing from a system wherein everyone is required to keep track of all available information and growing into experts for such case over years under guidance to a system with overwhelmingly much information wherein one operator can be remotely responsible for a plurality of different continuous flow engines being confronted with huge amounts of very different data.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a Method of monitoring an industrial plant containing at least one continuous flow engine,
wherein the method contains the steps of
- collecting data with regard to the current state of at least five, even more preferred at least 20, more preferred at least 70, components of the industrial plant,
- retrieving component data of the components containing datasets regarding the availability and criticality of the components from a database,
- creating an output based in current state taking into account the component data including the datasets regarding the availability and criticality of the components to provide a suggestion to review specific components.

An operator can access such database to retrieve the corresponding data. However, it can also be preferred to automatically forward the data to a control unit being adapted to utilized by an operator.

The term "availability" as used herein refers to the time until a replacement can be acquired. This, for example, takes into account the delivery time of corresponding suppliers, typical periods reoccurring of suppliers being unable to directly deliver replacements, the amount of replacement parts stored at a central facility and the like. Typically, it is preferred that the availability takes into account data stored on a remote database, preferably a database of a third party. For example, such database can be a database of a continuous flow engine manufacturer or a service provider of such continuous flow engine.

The term "criticality" as used herein refers to data relating to the outcome of a partial or completely damaged state of the component. For example, such data takes into account possible damages arising from such damage, for example, resulting from a part of such component located in the fluid stream utilized in the continuous flow engine breaking off potentially damaging blades and vanes located downstream. For example, such data takes into account the costs associated to unplanned downtimes resulting from such damage to restore functionality of the corresponding components.

It was noted that such system to provide additional guidance to an operator or other staff being working on such continuous flow engines is very beneficial for typical applications. While the requirements for monitoring and controlling such continuous flow engines increase with each upgrade and each new model introduced into the market the solutions to simplify the task for such operator grows more complicated. The present solution especially provides a support for apparently minor tasks like scheduling maintenance tasks and upgrades being typically far too low rated. Especially, taking into account that the more sophisticated the continuous flow engine and their upgrades advance the more the corresponding devices require a high quality monitoring. Resulting in the problem that in corresponding cases the danger of grave problems shifts from high order topics being subject of continuous improvements like the corrosion resistance and stability of blades and vanes to formerly apparently less prominent topics endangering the reliability and performance of corresponding continuous flow engines. The inventive method allows to take care of such possible source of problem to enable a long-term future utilization of upgraded, state of the art as well as future continuous flow engines.

According to a further aspect the present invention refers to a system adapted to be utilized in an inventive method comprising a processor and a non-transitory computer readable medium comprising computer executable instructions that when executed by the processor cause the system to perform operations comprising:
- collecting data with regard to the current state of at least five, even more preferred at least 20, more preferred at least 70, components of the industrial plant,
- retrieving component data of the components containing datasets regarding the availability and criticality of the components from a database,
creating an output based in current state taking into account the component data including the datasets regarding the availability and criticality of the components to provide a suggestion to review specific components.

According to a further aspect the present invention refers to an upgrade kit containing an inventive system.

According to a further aspect the present invention refers to an industrial plant, preferably an industrial power plant, adapted to realize an inventive method, wherein the industrial plant is adapted to send the output to a local database or a remote database, preferably a remote database.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a use of an inventive method, an inventive system, an inventive upgrade kit, or an inventive computer program product to support the operation and/or monitoring of an industrial plant containing at least one continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a scheme of an industrial plant containing a continuous flow engine being adapted to utilize the inventive method.
Fig. 2 shows a scheme of the inventive method.

Preferably, the embodiments hereafter contains, unless specified otherwise, at least one processor and/or data storage unit to implement the inventive method.

According to one aspect the present invention refers to a method as specified above.

Herein, it was noted that the inventive method can be especially useful for certain continuous flow engines. According to further embodiments it is preferred that the continuous flow engine is a gas turbine, a steam turbine or a compressor, more preferred a gas turbine. It was noted that such continuous flow engines, for example, typically provide a beneficial combination of big amount of available historic data, a surprisingly predictable behavior as well as a significant interaction of closely defined components being directly included in such continuous flow engine as well as the surrounding industrial supporting infrastructure. This allows to not only simplify application of the inventive method or such case, but also enables to, for example, further improve the results obtained herewith.

While it is possible to apply the inventive method to a complex single continuous flow engine it was noted that it is especially usefully applied to a fleet. According to further embodiments the industrial plant contains at least two continuous flow engines, more preferred at least five continuous flow engines, even more preferred at least ten continuous flow engines, wherein at least a part of the components is included in the at least two continuous flow engines. Typically, it is preferred that at least a part of the components is included in at least three continuous flow engines. Herein, the corresponding continuous flow engines each preferably contains at least five, even more preferred at least seven preferred at least 15, components. According to further embodiments it is furthermore additionally preferred that the corresponding continuous flow engines each contain at least three, even more preferred at least five, comparable components. Such comparable components provide the same measurement for different continuous flow engines. For example, said industrial plants can contain four identical gas turbines being continuous flow engines containing specific components like turbine blades and sensors being components as specified herein. Herein, it has to be noted that not all turbine blades have to be monitored. Typically, it is possible to select certain turbine blades that are indicative to deduct the state of similar turbine blades allowing to significantly reduce the required amount of effort to keep track of the real current state of the continuous flow engine.

For typical cases when utilizing the inventive method for existing industrial plants with a significant number of older continuous flow engine it is typically preferred to include theoretical data in the evaluations. According to further embodiments it is preferred that the current state of at least 10%, even more preferred at least 20%, even more preferred at least 40%, of the components is determined as theoretical current state based on a duration of usage of the components. Herein, such theoretical current state can be provided in addition to the measured current state resulting from, for example, sensor data. However, even in case all components are monitored by sensors providing data with regard to their current state it was surprisingly beneficial to provide such theoretical current state based on the utilization to this point. It was noted that for continuous flow engines as referenced herein such theoretical current state can be easily determined based on, for example, historic data and log files keeping track of the exact utilization of such continuous flow engines. Utilizing such theoretical current state in addition to the real current state provides many benefits easily justifying the additional effort required to provide such theoretical current state. For example, it can be utilized to track down abnormal behavior of the continuous flow engine and its components providing the possibility to detect even minor problems at the very early stage.

However, typically it is preferred that the theoretical data utilized does not exceed a certain degree. According to further embodiments it is preferred that the current state of at most 90%, more preferred at most 70%, even more preferred at most 50%, of the components is determined as theoretical current state based on a duration of usage of the components. It was noted that including too much theoretical data in corresponding evaluations is typically detrimental for many applications. Including real measured data, for example, significantly increases the reliability of corresponding evaluations. While it is typically preferable to rely on real data only it was further noted that a mixture of theoretical and real data depending on the specific case like the specific continuous flow engine monitored provides a very beneficial approach especially for monitoring older continuous flow engines.

Utilizing the inventive method allows to even provide suggestions with a high impact. According to further embodiments it is preferred that the output contains the suggestion to perform a shutdown of the continuous flow engine. Typically, it is preferred that such suggestion is accompanied by a point of time or period of time, more preferred a period of time, suggested for such shutdown. Surprisingly, it was noted that it is possible to provide such advanced suggestion utilizing the inventive method. Herein, the automated evaluation of the plurality of components including their state allows to provide a very detailed and reliable assessment of the time such shutdown is required. Selecting the components to be monitored strategically allows to also monitor interconnected components being in a functional relationship with their monitored components. This allows to significantly reduce the amount of sensor data required or allows to validate data of corresponding components.

Further data that can be beneficially utilized includes service data. According to further embodiments it is preferred that the method contains evaluating the current state of a component of the continuous flow engine without measured data of such component, wherein the current state of such component is indirectly determined based on measured data of a component being connected to such component lacking measured data. Typically, it is preferred that such method also makes use of service data contained in a database, wherein the service data contains data referring to the component without measured data like when said component was last serviced and what service steps have been performed.

A beneficial kind of data that can be acquired using the inventive method refers to the replacement of the components. According to further embodiments it is preferred that the output contains a suggestion what components should be replaced at a specified point of time or specified period of time. For example, such output can specify what component should be replaced during the next shutdown. Such possibility is deemed to be highly attractive for future application cases changing from a fixed maintenance schedule to a more flexible utilization of the continuous flow engine including an overall reduction of the maintenance work being reduced to the essentially required steps. Utilizing the inventive method such feature can be easily provided enabling to provide a significant overall benefit significantly simplifying the required tasks of the operator in such situation. Furthermore, it significantly reduces the risk of mistake resulting in an unplanned downtime based on a non-serviced component missed during planning the specifically adapted service task on demand.

The data acquired can furthermore be improved by providing certain data as input. According to further embodiments it is preferred that the method contains the step of providing an input containing data being related to the maintenance planning and/or the intended utilization of the continuous flow engine, wherein the output contains at least one suggestion of a point of time or period of time for replacing at least a part of the components, wherein the suggestion takes into account the input. Providing the possibility to process such input to optimize the service planning makes best use of the possibilities provided by the inventive method. Simultaneously, the overall benefit to be able to request such data contributes significantly to provide a more user friendly and simplified control and management system making best use of the time and expertise of an operator being free to invest his resources more worthwhile.

According to further embodiments it is preferred that the database is a local database or distributed database. Typically, it is preferred that the local database utilized in this context is adapted to be permanently or temporarily connected to the distributed database to update the data with regard to the components. Making use of centrally collected data being, for example, collected over decades on the side of the manufacturer of the continuous flow engines allows to significantly increase the reliability of assessments and predictions. Furthermore, latest data regarding new components being introduced during upgrades can be utilized long before the data collected at a single industrial plant can be beneficially put into practice.

Certain components are typically especially point of interest to be monitored using the inventive method. According to further embodiments it is preferred that at least one component is located in a fuel supply stream and/or an air intake system of the continuous flow engine. It was noted that utilizing the data available for such components are very beneficially to be utilized. For example, monitoring a component related to the fuel supply stream allows to gain data referring to multiple other features of the corresponding continuous flow engine like a gas turbine. For example, generic data with regard to the burning process or specific pressure values can be deducted. Combining this data with the air flow utilized in the burner allows to calculate the expected temperature. Such data can be compared to real measured temperature data to compare such data. Based on a deviation identified, for example, even minor problems can be detected in an early stage. Also, it becomes possible to create an interacting network of features being able to provide evidence of tampering with the system like a third party manipulating specific sensor data or the like. Taking into account the complexity of such continuous flow engine combined with the highly predictable behavior allows to provide a verification system being essentially impossible to be imitated.

A further possibility to gain more insight utilizes simulation. According to further embodiments it is preferred that the method contains the step of simulating a subsequent wearout of at least 20%, even more preferred at least 30%, even more preferred at least 50%, of the components utilizing a virtual model of the components. Such subsequent wearout represents an expected wearout based on the data acquired by the plurality of the components. Herein, such wearout prediction is significantly improved by the plurality of data as the resulting network of data allows to gain a significantly improved insight in the utilization of the continuous flow engine and resulting decreases of the lifetime of components. While current models tested utilize specific characteristics to possibly predict a lifetime of a component it was noted that a less process power requiring system relying on the data of a plurality of components is surprisingly more reliable. It was noted that using such less detailed but multiangle view of a more complete system is for typical applications of continuous flow engines typically preferred compared to insight on the highly advanced interpretation of a single data source. Herein, the less detailed information and extensive review of a single component is surprisingly less efficient or reliable.

Alternatively or additionally historical data can be utilized. According to further embodiments it is preferred that the method contains the step of evaluating a subsequent wearout of at least 30%, even more preferred at least 50%, even more preferred at least 80%, of the components utilizing historical data. Such historical data can be stored in a historical database being a local database or a distributed database. Typically, it is preferred that the local database utilized as historical database is based on the distributed database preferably utilized to provide frequent updates of such local database. Such utilization of historical data can also be beneficially utilized in addition to a simulation based evaluation. However, typically such historic database is used for industrial plants not providing the required processing power required to provide such evaluation. For industrial plants currently available it is typically preferred to utilize historical data for repeated evaluations to provide repeated updates of corresponding data. To gain a more detailed insight simulated data is utilized to provide additional information upon request. For example, in case the operator wants to get a final review before scheduling the next maintenance. For the future it is expected that utilizing an increased overall processing power will allow to always utilize simulation and historical data to permanently provide such improved insight.

According to a further aspect the present invention refers to a system adapted to be utilized in an inventive method comprising a processor and a non-transitory computer readable medium comprising computer executable instructions that when executed by the processor cause the system to perform operations comprising:
- collecting data with regard to the current state of at least five, even more preferred at least 20, more preferred at least 70, components of the industrial plant,
- retrieving component data of the components containing datasets regarding the availability and criticality of the components from a database,
- creating an output based in current state taking into account the component data including the datasets regarding the availability and criticality of the components to provide a suggestion to review specific components.

According to a further aspect the present invention refers to an upgrade kit containing an inventive system.

According to a further aspect the present invention refers to an industrial plant, preferably an industrial power plant, adapted to realize an inventive method, wherein the industrial plant is adapted to send the output to a local database or a remote database, preferably a remote database.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a use of an inventive method, an inventive system, an inventive upgrade kit, or an inventive computer program product to support the operation and/or monitoring of an industrial plant containing at least one continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

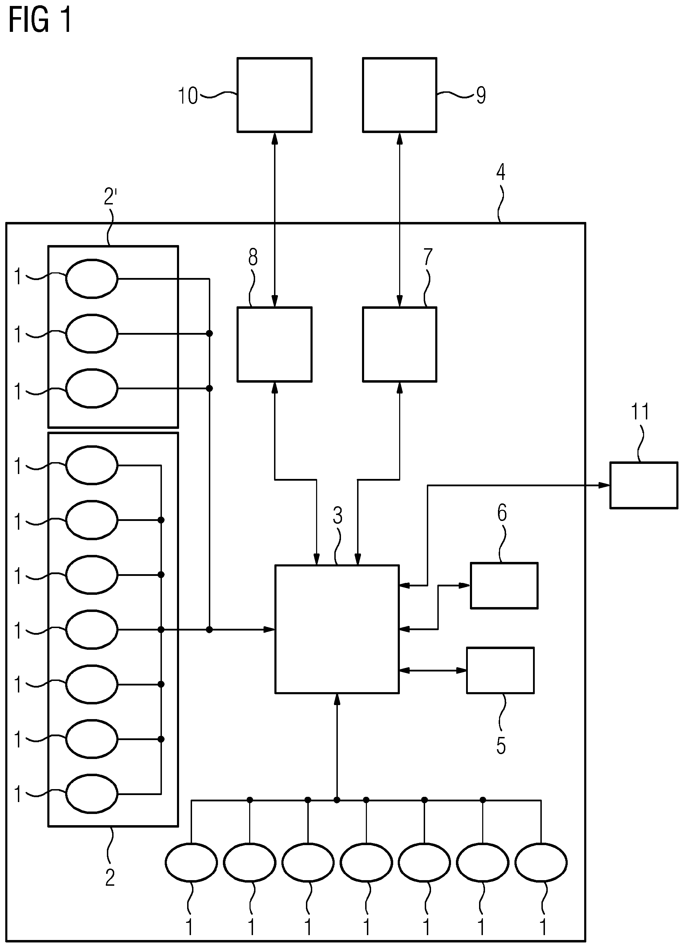

Fig. 1 shows a scheme of an industrial plant 4 containing a continuous flow engine 2, 2' being adapted to utilize the inventive method. Herein, a part of the components 1 monitored are shown. Seven components 1 are located in one continuous flow engine 2, three further components 1 are located in a second continuous flow engine 2', and seven further components are located in the supporting structure being utilized to use the continuous flow engines 2, 2'. One component 1 shown for each continuous flow engine 2, 2' is part of the fuel supply stream of the corresponding continuous flow engine being a gas turbine. Multiple further components 1 monitored are located in the air intake of said gas turbines.

Data regarding the current state of the components 1 are forwarded to the system 3 collecting said data and further data of 83 additional components 1 not shown. Further data regarding the availability and criticality of the components are retrieved by the system 3 from a local database 6. Utilizing the data of the components 1 and the data of the local database 6 the system 3 creates an output to provide suggestions to review specific components 1. Such output can be stored in a database being located local or remotely and is preferably directly forwarded to an interface 5 allowing an operator to gain an improved and more versatile insight in the current state of the industrial plant as a whole. Herein, the suggestion range of suggestions of times or periods being most suitable for maintenance to suggesting a complete shutdown to immediately respond to a problem.

The system 3 has been introduced as upgrade kit in the industrial plant 4. A complete solution was provided in this context. The upgrade kit containing the system 3 as well as the historic database 7 and the simulation unit 8 has been connected to the existing data infrastructure of the industrial plant 4. System 3 was configured to automatically scan for relevant components 1 and their data sources in the data infrastructure. Based on this evaluation the field personal tasked with installing the upgrade was requested to install further sensors in the continuous flow engines 2, 2', to provide certain connections in the data infrastructure, and even to replace certain components 1. Hereafter, an automatic updating process of the historic database 7 and the simulation unit 8 is started via an internet connection. Temporarily an access is granted for the third party installing the upgrade kit to test the connections and whether the current state of the components is satisfying to enable the inventive method. In case of problems noted corresponding further adaptions or upgrades are performed on demand. Furthermore, the feedback loop with the user interface 5 was tested and established. A corresponding program is installed on the local interfaces allowing to show the output of the system 3 in a simplified manner to make best use of the inventive method.

While it is possible to also include an automatic shutdown being triggered by system 3 it is typically preferred to utilize the expertise of an operator being involved. For example, it was noted that especially older industrial plants 4 and older continuous flow engines typically lack a corresponding process and even data infrastructure to ensure that changes resulting from upgrades and maintenance are reliably noted down in such system 3 resulting in the chance that a corresponding action being mandatory by the system 3 might not be justified. For example, such action deemed necessary by the system 3 might be originating from a changed components sending data being interpreted as grave failure, wherein such shutdown can easily have some grave impact in case, for example, a compressor of a refinery or a gas turbine of an industrial power plant 4 is shut down without reason. Thus, it has to be carefully considered what rights are granted to such system 3 and providing such supporting system is typically also beneficially limited to a certain degree with regard to its capabilities to automatically interact.

A supporting use of the system 3 is furthermore increased by the possibility of an operator to send a request to the system 3 containing data being related to the maintenance planning and/or the intended utilization of the continuous flow engine. Herein, such input can simply be entered at an interface 5 without requiring complex programming. The system 3 is adapted to review this data and utilize it as additional constraint to check whether this is suitable or whether an output is generated containing at least one suggestion of a point of time or period of time for replacing at least a part of the components taking into account the information provided.

The system 3 as shown in figure 1 utilizes a mixture of theoretical data and real data to determine the current state of the components 1. The current state of 25% of the components are determined as theoretical current state based on a duration of usage of the components 1. While the value of the corresponding data is rated lower and the data really determined it still provides a significant benefit for the overall evaluation. In case a significant deviation is detected the system 3 can also provide suggestions to include further sensors to also provide a real time monitoring for existing components 1 of very old continuous engines 2, 2' being not adapted to provide such data.

Further data regarding the current state of 15% of the components 1 is based on indirect data being no data with regard to the current state of the component 1 measured at the component 1. Corresponding determinations of the current state are, for example, based on measurement of interrelated elements connected to said component, wherein the current state of the specific component is determined indirectly.

System 3 is furthermore adapted to exchange data with a historic database 7 and a simulation unit 8. The historic database is furthermore adapted to communicate with a historic remote database to, for example, retrieve additional historic data to fill available gaps in the database or to include usable data after changes or upgrades of the continuous flow engines. The simulation unit is also adapted to communicate with a historic remote database. This connection can be, for example, utilized to retrieve updates of the utilized models or even completely new models to be utilized to simulate the behavior of the components.

The simulation unit 8 allows to significantly improve the reliability of even very detailed suggestions by simulating the subsequent wearout of the components based on recent use as well as characteristics of the gas turbines and components 1. This prediction is further substantiated by historic data retrieved from the historic database 7 to support these predictions.

The system 3 is also adapted to communicate with an external database directly. The database as shown in figure 1 is a component remote database containing data regarding the components 1 as contained in the local database 6. Furthermore, it contains data with regard to alternative components or additional data not contained in the local database 6. This allows to, for example, directly retrieve data with regard to exchanged components or data that might clarify an unusual behavior being not interpreted correctly based on a lack of insight. The component remote database 11 is provided by a third party manufacturing the continuous flow engines and providing spare parts. The high expertise and insight on this side can be beneficially utilized that way to make best use of the possibilities granted by the continuous flow engine despite their age, upgrades and maintenance work in the following years and decades or the like.

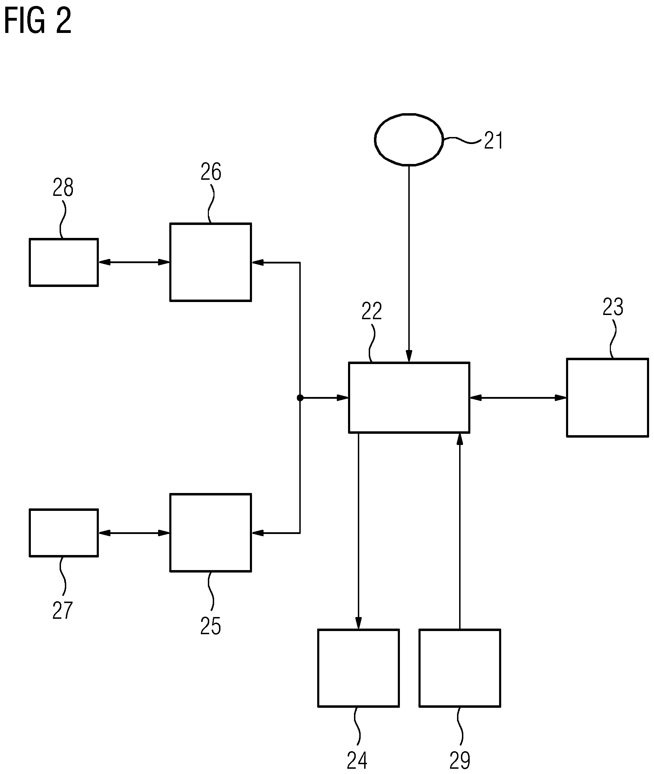

Fig. 2 shows a scheme of the inventive method. Herein, the component data 21 is collected by the inventive system to execute step 22 containing the evaluation of said data. To enable such assessment the system executes steps 25 including historic data retrieval from an historic database and step 26 including a simulation data retrieval from the simulation unit. In case the historic data available is considered being not enough step 27 is performed including requesting additional historic data from a historic remote database. Furthermore, in case the system identifies deficiencies of the simulations the simulation unit is adapted to execute step 28 including retrieving updates or alternative models for the simulations from the simulation remote database.

Based on the data acquired the system executes step 24 including creating an output. Said output stored in a local database and forwarded to an interface to be evaluated by an operator. Herein, the output also contains data what components provide a significant deviation from former evaluations and expected lifetimes. Based on this information, the attention of the operator is drawn to components required to be reviewed in more detail. In response hereto step 29 is performed including to provide an input via the interface to the system. Said input contains a request whether an updated time schedule for maintenance is to be considered and how the expected state of the corresponding components would be at the given time. This results in a feedback loop providing the operator with additional data and evaluations with regard to components to be exchanged at that time and what further components are maybe required to be replaced before the subsequent maintenance. Furthermore, it provides a suggestion whether the subsequent maintenance might be sped up or whether further components might be included in the current maintenance despite still being in relatively good shape.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Method of monitoring an industrial plant (4) containing at least one continuous flow engine (2, 2'),
wherein the method contains the steps of
- collecting data with regard to the current state of at least five components (1) of the industrial plant (4),
- retrieving component data of the components (1) containing datasets regarding the availability and criticality of the components (1) from a database,
- creating an output based in current state taking into account the component data including the datasets regarding the availability and criticality of the components (1) to provide a suggestion to review specific components (1).

2. Method according to claim 1, wherein the industrial plant (4) contains at least two continuous flow engines (2, 2'),
wherein at least a part of the components (1) is included in the at least two continuous flow engines (2, 2').

3. Method according to any of claims 1 to 2, wherein the current state of at least 10% of the components (1) is determined as theoretical current state based on a duration of usage of the components (1).

4. Method according to any of claims 1 to 3, wherein the output contains the suggestion to perform a shutdown of the continuous flow engine (2, 2').

5. Method according to any of claims 1 to 4, wherein the method contains evaluating the current state of a component (1) of the continuous flow engine (2, 2') without measured data of such component (1), wherein the current state of such component (1) is indirectly determined based on measured data of a component (1) being connected to component (1) without measured data.

6. Method according to any of claims 1 to 5, wherein the output contains a suggestion what components (1) should be replaced at a specified point of time or specified period of time.

7. Method according to any of claims 1 to 6, wherein the method contains the step of providing an input containing data being related to the maintenance planning and/or the intended utilization of the continuous flow engine (2, 2'), wherein the output contains at least one suggestion of a point of time or period of time for replacing at least a part of the components (1), wherein the suggestion takes into account the input.

8. Method according to any of claims 1 to 7, wherein at least one component (1) is located in a fuel supply stream and/or an air intake of the continuous flow engine (2, 2').

9. Method according to any of claims 1 to 8, wherein the method contains the step of simulating a subsequent wearout of at least 20% of the components (1) utilizing a virtual model of the components (1).

10. Method according to any of claims 1 to 9, wherein the method contains the step of evaluating a subsequent wearout of at least 30% of the components (1) utilizing historical data.

11. System (3) adapted to be utilized in a method according to any of claims 1 to 10 comprising a processor and a non-transitory computer readable medium comprising computer executable instructions that when executed by the processor cause the system (3) to perform operations comprising:
- collecting data with regard to the current state of at least five components (1) of the industrial plant (4),
- retrieving component data of the components (1) containing datasets regarding the availability and criticality of the components (1) from a database,
- creating an output based in current state taking into account the component data including the datasets regarding the availability and criticality of the components (1) to provide a suggestion to review specific components (1).

12. Upgrade kit containing a system (3) according to claim 11.

13. An industrial plant (4), preferably an industrial power plant, adapted to realize a method according to any of claim 1 to 10, wherein the industrial plant (4) is adapted to send the output to a local database (6) or a remote database, preferably a remote database.

14. Computer program product, tangibly embodied in a machine-readable storage medium, including instructions operable to cause a computing entity to execute a method according to any of claims 1 to 10.

15. Use of a method according to any of claims 1 to 10, a system (3) according to claim 11, an upgrade kit according to claim 12 or a computer program product according to claim 14 to support the operation and/or monitoring of an industrial plant (4) containing at least one continuous flow engine (2, 2').
